# EUROPÄISCHE PATENTSCHRIFT

(11) **EP 2 213 594 B1**
(45) Veröffentlichungstag und Bekanntmachung des Hinweises auf die Patenterteilung: **29.05.2013**
(21) Anmeldenummer: 10001941.3
(22) Anmeldetag: 08.09.2006
(51) Int. Cl.: B65G 15/14, B65G 19/02, B29C 49/42

(54) **Vorrichtung zum Transportieren von Gegenständen mit einer Profilierung, insbesondere von Flaschen oder Vorformelingen**
Conveyor for transporting bottles, preforms or the like
Conyoyeur pour le transport de bouteilles, préformes ou équivalents

(30) Priorität: 09.09.2005 DE 102005043282; 15.08.2006 DE 102006038320
(43) Veröffentlichungstag der Anmeldung: 04.08.2010
(62) Teilanmeldung aus: 06805672.0
(73) Patentinhaber: SIDEL PARTICIPATIONS, S.A.S., 76930 Octeville-sur-Mer (FR)
(72) Erfinder: Klaiber, Franz, 78564 Wehingen (DE); Novak, Peter, 8274 Tägerwilen (CH)
(74) Vertreter: Weiss, Peter

(56) Entgegenhaltungen:
- WO-A-01/85580
- WO-A-97/10163
- DE-A1- 3 515 353
- DE-A1- 19 821 105
- DE-U1- 20 110 929
- DE-U1- 29 901 401
- IT-B- 1 239 102
- JP-A- 11 001 212
- US-A- 4 479 574

## Beschreibung

Die Erfindung betrifft eine Vorrichtung zum Transportieren von Gegenständen nach dem Oberbegriff von Anspruch 1.

### Stand der Technik

Eine Vielzahl von Gegenständen müssen heute von einer Bearbeitungsstation zur nächsten oder zur Verpackung transportiert werden. Dies gilt beispielsweise für Flaschen, die auf ihrem Transport noch gefüllt oder etikettiert werden. Vor allem gilt dies aber für Vorformlinge (Preforms), die in einer Spritzgiessmaschine hergestellt und dann in einer Blasformvorrichtung zu einer Flasche aufgeblasen werden. Diese Vorformlinge besitzen einen Ringkragen, der im wesentlichen zur Handhabung der Vorformlinge und späteren Flaschen dient. Der Ringkragen ist nahe unterhalb der Flaschenöffnung vorgesehen und begrenzt in der Regel auch das Gewinde für das Aufschrauben eines Schraubverschlusses.

Für den Transport von Flaschen sind beispielsweise aus der DE 35 15 353 A1 Scharnierketten, Flachriemen, Rundprofilschnüren od. dgl. bekannt, welche den Ringkragen untergreifen und so den Transport bewirken.

In der EP 0 842 875 A1 wird der Ringkragen von je einem Paar von Endlosschnüren über- bzw. untergriffen.

Nach der heutigen Technik werden die im Spritzgiesswerkzeug hergestellten Vorformlingen in komplizierten und viel Platz beanspruchenden Anlagen geordnet und zu der Blasformeinrichtung transportiert. Neu ist es, diese Vorformlinge in einem zentrifugenartigen Separator zu vereinzeln, wie er beispielsweise in der WO 2006/084831 A1 beschrieben ist.

Des weiteren ist aus der DE 299 01 401 U1 ein Flaschenförderer bekannt, bei dem die Flaschen auf zwei Führungsschienen geführt werden. Ein Abstand der Schienen voneinander kann durch Verschieben von entsprechenden Halterungen auf einfache Weise schnell an die Halsabmessung der zu fördernden Flaschen angepasst werden.

Aus der WO 01/85580 A1 ist ferner ein Flaschenförderer bekannt, bei dem sich der Hals einer Flasche innerhalb eines zweiteiligen Gehäuses befindet und sich über einen Ringkragen in einem Gehäuseschlitz seitlich abstützt. Ähnliches findet sich auch in der WO 97/10163 A1.

Aus der DE 35 15 353 A1 ist wiederum eine gattungsgemäße Vorrichtung zum Transportieren von Flaschen mit einem Ringkragen mit Hilfe von einer Transporteinrichtung zwischen zwei Gleitebenen, auf denen der Ringkragen aufliegt, bekannt, wobei die Vorrichtung ein einen Gehäuseschlitz aufweisendes Gehäuse aufweist, wobei das Gehäuse aus zwei Gehäuseschalen zusammengesetzt ist und wobei die Randkanten des Gehäuseschlitzes die Gleitebene aufweisen.

### Aufgabe

Aufgabe der vorliegenden Erfindung ist es, eine geeignete Vorrichtung der oben genannten Art zur Verfügung zu stellen, mit der die Gegenstände, speziell die Vorformlinge, geordnet und sicher von der einen zur nächsten Station transportiert werden können.

### Lösung der Aufgabe

Zur Lösung der Aufgabe führt der Gegenstand des Anspruchs 1.

Ein Gedanke der vorliegenden Erfindung bezieht sich auf die Ausgestaltung der Gleitbahnen, deren Abstand zueinander veränderbar ist. Zu diesem Zweck sind die Gleitbahnen Teil eines Gehäuses, welches bevorzugt aus zwei Gehäuseschalen besteht. Die beiden Gehäuseschalen bilden im Bereich der Gleitbahnen einen Schlitz aus, wobei Randkanten einen gewünschten Abstand voneinander einhalten. Die Randkanten nehmen in Gebrauchslage zwischen sich die Vorformlinge auf.

Um nun diesen Abstand ändern zu können, sollen die beiden Gehäuseschalen ineinander verschiebbar sein, wozu sich beispielsweise zwei Schenkelstreifen der Gehäuseschalen überlappen und so überlappend miteinander verbunden werden können.

Die Behälter, die transportiert werden, weisen vorzugsweise einen Rumpf, einen Ringkragen und eine Mündung auf, und sie sind vorzugsweise PET-Flaschen bzw. PET-Vorformlinge. Zur Unterstützung und zum Transport der Behälter sind die Gleitbahnen und Transporteinrichtungen vorgesehen, wobei die Gleitbahnen vorzugsweise ortsfest angebracht sind. Die Gleitbahnen können z.B. von Kunststoff- oder Metallleisten gebildet werden. Die Gleitbahnen können aber nicht nur als Leiste ausgebildet sein, vielmehr ist eine beliebige Ausgestaltung, wie z.B. in der Art eines mit kreisrundem Querschnitt versehenen Bandes möglich.

Die mindestens eine Transporteinrichtung ist vorzugsweise für den Hauptenergieeintrag in die Behälter zur Vorwärtsbewegung in Transportrichtung zuständig. Das Gleitbahnen und die Transporteinrichtung greifen vorzugsweise unterhalb bzw. oberhalb des Ringkragens ein. Eine den Ringkragen berührende Ineingriffnahme der Gleitbahnen bzw. Transporteinrichtung ist genauso denkbar, wie eine mit leichtem Abstand zum Ringkragen durchgeführte Ineingriffnahme.

Die mindestens eine Transporteinrichtung ist als ein endlos umlaufendes Trum ausgebildet, an dem Federelemente angebracht sind. Durch Zusammenwirken der Federelemente mit Federelementen anderer Transporteinrichtungen ergibt sich eine klemmende Erfassung der Behälter im Bereich des Ringkragens.

Gemäss einer bevorzugten Weiterbildung der Erfindung sind die Gleitbahnen unbeweglich und die Transporteinrichtung in Transportrichtung beweglich angebracht, wobei weiter bevorzugt zwei Gleitbahnen und zwei Transporteinrichtungen vorhanden sind. Vorzugsweise werden die Behälter hängend so transportiert, dass die Gleitbahnen parallel tangential unterhalb dem Ringkragen eingreifen, während die beiden Transporteinrichtungen tangential parallel oberhalb des Ringkragens angebracht sind. Es liegt aber auch im Bereich der Erfindung, dass drei Gleitbahnen vorhanden sind, die den Behälter in einer bestimmten Lage halten, währenddessen eine Transporteinrichtung für die Vorwärtsbewegung in Transportrichtung sorgt.

Zumindest ein Teil der Transporteinrichtung, welche dem Gegenstand reibschlüssig anliegt, stützt sich gegen Druckrollen ab. Diese Druckrollen sind nachgiebig gelagert . Hierdurch wird ein sicherer Transport der Vorformlinge gewährleistet. In einem Ausführungsbeispiel der Erfindung sind die Druckrollen an Federzungen, Blattfedern, Federbügel od.dgl. gelagert, die vorgespannt sind. In einem weiteren Ausführungsbeispiel der Erfindung können die Druckrollen an einem Lagerblock angeordnet sein, der sich dann wiederum über eine Feder gegen eine Wand abstützt. Damit diese Feder nicht seitlich ausbricht, umschlingt sie bevorzugt einen Bolzen, über den der Lagerblock in die Wand eingesetzt ist.

In einem Ausführungsbeispiel der Erfindung können dem zu transportierenden Gegenstand beidseitig Endlosriemen, bevorzugt Endlosrundriemen, zugeordnet werden, zwischen denen dann der zu transportierende Gegenstand eingeklemmt ist. Durch die Wahl von im Querschnitt runden Endlosriemen findet keine Änderung der Angriffspunkte an den Gegenständen statt, gleichgültig in welcher Lage die Vorformlinge transportiert werden.

Diese Endlosriemen umschlingen vorzugsweise beabstandet angeordnete Umlenkrollen, die bevorzugt kippbar sind, sodass durch Veränderung der Lage der Umlenkrollen Vorformlinge nicht nur hängend, sondern auch waagrecht oder sogar senkrecht aufstehend transportiert werden können, je nach Wunsch. Hier hilft zusätzlich noch ein Niederhalter, an dem die Vorformlinge anschlagen bzw. anliegen. Das heisst, die Vorformlinge können in jeder beliebigen Lage und ungetaktet transportiert werden, was bei den bislang bekannten Vorrichtungen nicht möglich war. Zum Beispiel war bislang kein Transport und Staudruckerzeugung von Vorformlingen von unten nach oben möglich. Mit der erfindungsgemässe Vorrichtung ist dies machbar.

Selbstverständlich müssen auch die Gleitebenen bzw. Unterstützungsmittel der gewünschten Transportbahn angepasst werden. Auf diese Weise ist jede beliebige Führung der Vorformlinge möglich. Dies hat zur Folge, dass die räumliche Ausrichtung der Vorformlinge einem Einlauf an einer Blasmaschine unterschiedlichster Hersteller angepasst werden kann.

Speziell beim Transport von Vorformlingen aber auch von Flaschen besteht die Notwendigkeit, dass sich die Transportbahn in einer Ebene erstreckt. Verläuft die Transportbahn jedoch ansteigend bzw. abfallend und durchläuft dort unterschiedliche Steigungen, so gibt es positive und negative Steigungsbereiche, in denen sich der Abstand der Mittelachsen von aufeinander folgenden Gegenständen verringert bzw. erweitert. Verringert sich der Abstand, so weichen die aufeinander folgenden Gegenstände aus, benötigen mehr Platz und können sich verkeilen. Ferner reiben sie aneinander.

Um diesem Nachteil vorzubeugen, wird gemäss der vorliegenden Erfindung in einem Ausführungsbeispiel die Möglichkeit eröffnet, dass ein Auslenkelement in den Bereich der negativen Steigung in die Transportbahn der Gegenstände eingesetzt wird, sodass diese an einer Gleitfläche entlang gleiten und nach aussen gelenkt werden. Hierdurch wird der sich verringernde Abstand zwischen den Mittelachsen von aufeinander folgenden Vorformlingen wieder erhöht.

Denkbar ist auch, dass die Gleitebenen, auf denen die Ringkrägen der Vorformlinge entlang gleiten, in einzelnen Bereichen in unterschiedlichen Ebenen verlaufen. Hierdurch erfolgt ein Kippen der Vorformlinge, sodass diese ebenfalls seitlich ausgelenkt werden und der Abstand ihrer Mittelachsen wieder erhöht wird.

Denkbar ist auch das Anordnen von unterschiedlich geneigten Gleitebenen, die zudem noch versetzt in unterschiedlichen Höhen verlaufen können. Hier sind viele Möglichkeiten denkbar und sollen von der vorliegenden Erfindung umfasst sein.

Gerade die Möglichkeit, welche die vorliegenden Erfindung durch die unterschiedliche Anordnung der Gleitebenen bietet, lässt beispielsweise das Problem eines Negativbogens gar nicht erst entstehen. Die Vorformlinge können in beliebiger Lage ihrer Mittelachsen transportiert werden, sodass dem gewünschten Abstand der Mittelachsen durch Änderung der Lage der Vorformlinge im Raum Rechnung getragen werden kann.

### FIGURENBESCHREIBUNG.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer Ausführungsform der erfindüngsgemässen Vorrichtung zum Transportieren von Vorformlingen;
Figur 2 eine vergrössert dargestellte Seitenansicht aus einem Teilbereich der Vorrichtung gemäss Figur 1;
Figur 3 einen Querschnitt durch Figur 2 entlang Linie III - III;
Figur 4 einen Querschnitt durch Figur 2 entlang Linie IV - IV;
Figur 5 eine schematische Seitenansicht von Teilen der Vorrichtung gemäss Figur 3 in verschiedenen Anordnungen von Endlosriemen;
Figur 6 eine Seitenansicht eines Teilausschnitts aus einer Vorrichtung zur Transportlageänderung von Gegenständen ;
Figur 7 eine Draufsicht auf den Teilausschnitt gemäss Figur 6 ;
Figur 8 eine schematische Darstellung von verschiedenen Transportlagen von Vorformlingen ;
Figur 9 eine Schnittansicht von Teilen eines weiteren Ausführungsbeispieis einer erfindungsgemäßen vorrichtung zum Transportieren von Vorformlingen;
Figur 10 eine Draufsicht auf die Teile der Vorrichtung gemäss Figur 9;
Figur 11 eine Seitenansicht eines Teils einer Transportstrecke nach dem Stand der Technik ;
Figur 12 eine Sicht in Transportrichtung der Vorformlinge mit weiteren Teilen der Vorrichtung zum Transportieren dieser Vorformlinge;
Figur 13 eine Unteransicht auf den Teilbereich der Vorrichtung gemäss Figur 12;
Figur 14 eine Seitenansicht eines weiteren Ausschnitts aus einem weiteren Ausführungsbeispiel einer erfindungsgemässen Vorrichtung zum Transportieren von Gegenständen;
Figur 15 eine perspektivische Ansicht des Teilbereichs gemäss Figur 18;
Figur 16 eine weitere perspektivische Ansicht eines weiteren Teilbereichs einer Vorrichtung zum Transportieren von Gegenständen.

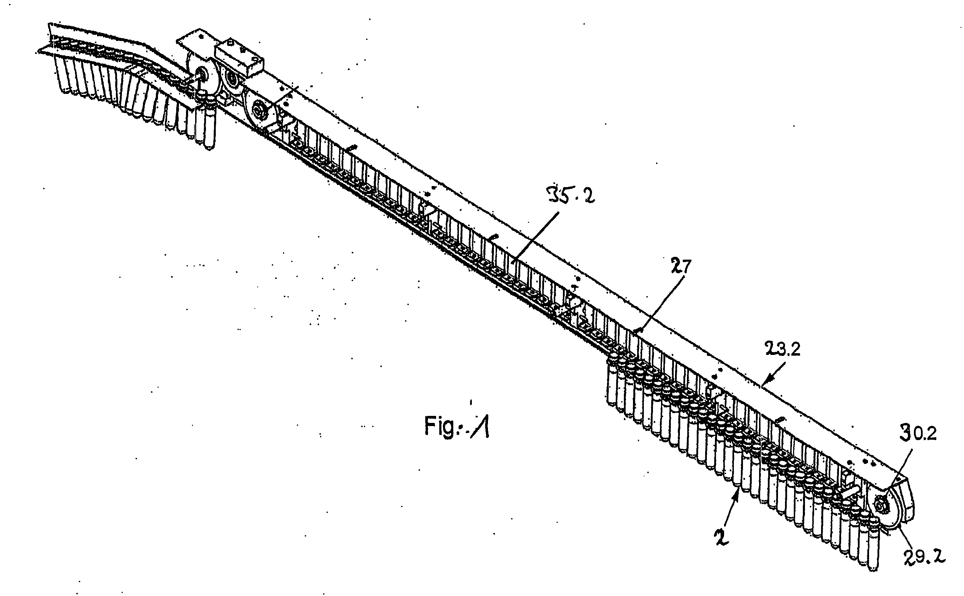

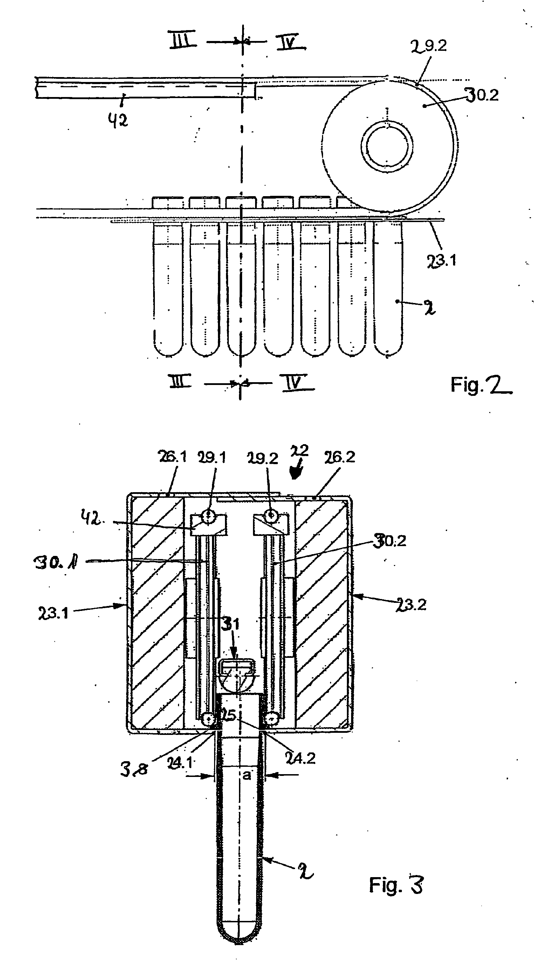

Eine erfindungsgemässe Vorrichtung zum Transportieren von Vorformlingen 2 weist gemäss Figur 2 und 3 ein Gehäuse 22 auf, welches aus zwei Gehäuseschalen 23.1 und 23.2 gebildet ist. Die Gehäuseschalen 23.1 und 23.2 sind ineinander verschiebbar, sodass ein Abstand a von Randkanten 24.1 und 24.2, die einen Schlitz 25 zwischen sich ausbilden, verändert werden kann. Hierzu überlappen sich die beiden Gehäuseschalen 23.1 und 23.2 mit ihren oberen Schenkeln 26.1 und 26.2 und sind in diesem Überlappungsbereich durch nicht näher gezeigte Befestigungselemente, welche in Figur 1 gezeigte Langlöcher 27 durchsetzen, verbunden.

In dem Schlitz 25 gleiten die Vorformlinge 2, wobei sie mit dem Ringkragen 3 Gleitebenen 32.1, 32.2 seitlich anschliessend an die Randkanten 24.1 und 24.2 aufliegen.

Dem Transport der Vorformlinge 2 entlang dem Schlitz 25 in dem Gehäuse 22 dienen zwei beidseitig angeordnete Endlosriemen 29.1 und 29.2, die Umlenkrollen 30.1 und 30.2 umschlingen und in Kunststoffschienen 42 laufen. Dabei schmiegen sich die Endlosriemen 29.1 und 29.2 oberhalb des Ringkragens 3 eng an den Hals der Vorformlinge 2 an und nehmen die Vorformlinge 2 reibschlüssig mit. Damit die Vorformlinge 2 nicht nach oben ausweichen können, dient zusätzlich eine Schiene 31 als Niederhalter.

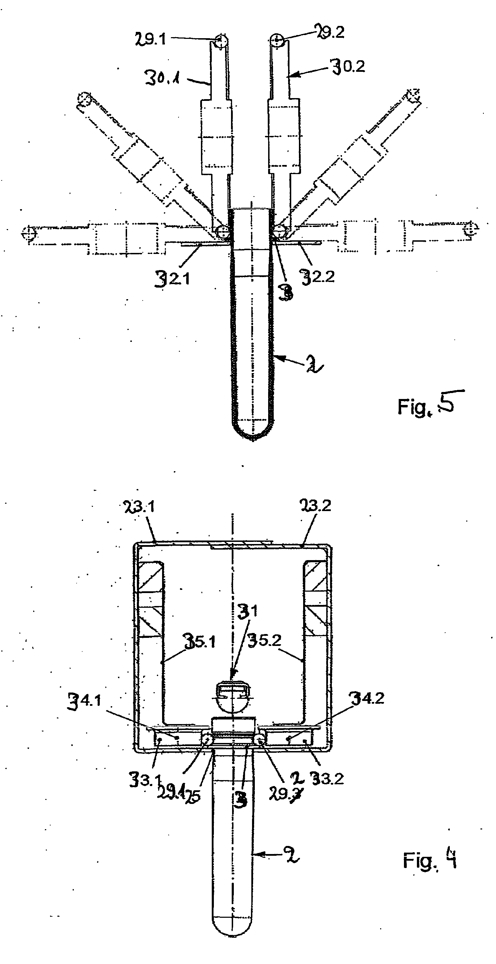

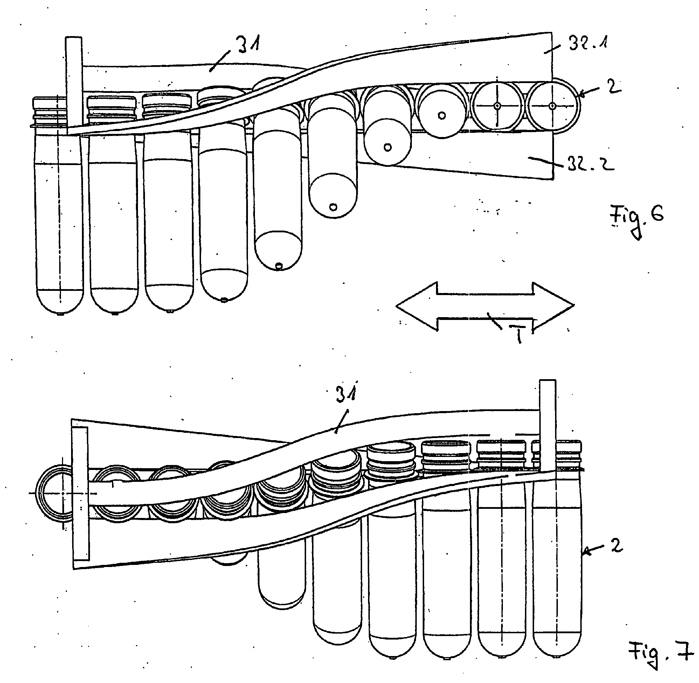

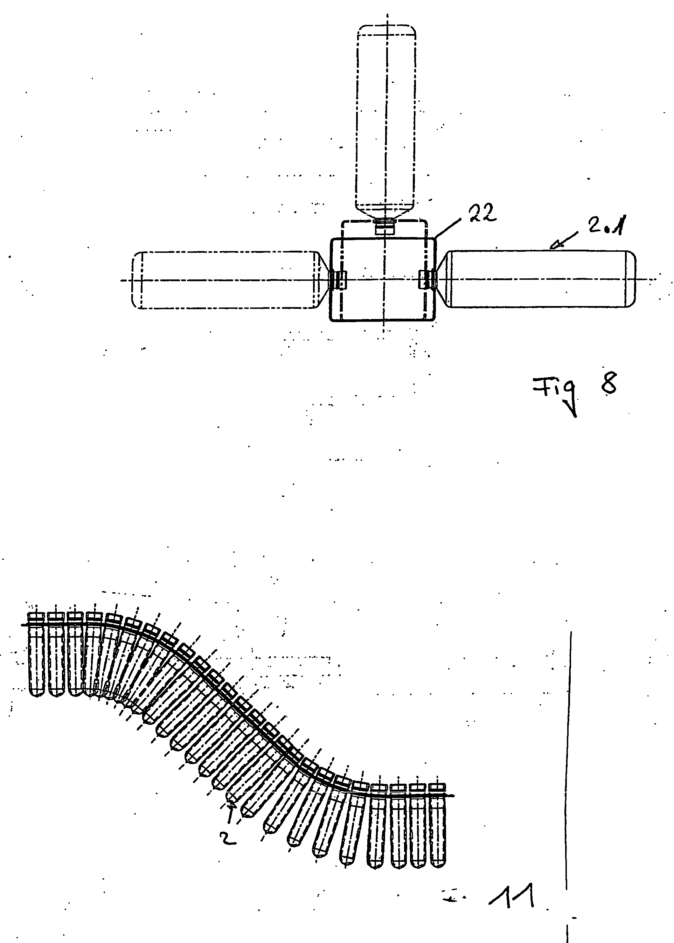

In Figur 5 sind die beiden Gleitebenen 32.1 und 32.2 angedeutet, auf denen der Ringkragen 3 entlang gleitet. Strichpunktiert sind aber weitere verschiedene Gebrauchslagen der Umlenkrollen 30.1 bzw. 30.2 angedeutet, sodass ersichtlich wird, dass die entsprechenden Endlosriemen 29.1 und 29.2 den Vorformling 2 in jeder gewünschten Position angreifen und weitertransportieren können, je nachdem welche Lage konstruktiv zu bevorzugen ist. Dies hängt vor allem auch davon ab, ob ein hängender Transport des Vorformlingen, ein waagrechter oder gar ein senkrechter Transport gewünscht wird. Die letzten beiden erwähnten Transportmöglichkeiten sind in Figur 8 angedeutet. In den Figuren 6 und 7 wird gezeigt, dass durch eine Führung der Gleitebenen 32.1 und 32.2 ohne Schwierigkeiten ein Ausrichten der Vorformlinge von einer waagerechten Lage in einer hängenden Lage möglich ist. Dasselbe gilt natürlich auch für ein Ausrichten der Vorformlinge von einer hängenden In eine waagerechte Lage und von dort sogar in eine senkrechte Lage.

Gemäss den Figuren 3 und 4 greifen die beiden Endlosriemen 29.1 und 29.2 die Vorformlinge 2 von je einer Seite her an, sodass die Vorformlinge 2 bei ihrem Transport durch den Schlitz 25 bewegt werden. Damit die Endlosriemen 29.1 und 29.2 in engem, das heisst in reibschlüssigem Kontakt mit den Vorformlingen 2 gelangen, sind seitliche Druckrollen 33.1 und 33.2 vorgesehen, die die Endlosriemen 29.1 und 29.2 federnd gegen den Hals des Vorformlings 2 oberhalb des Ringkragens 3 drücken. Diese Druckrollen 33.1 und 33.2 laufen. mit den Endlosriemen 29.1 und 29.2. Dabei drehen sie um eine Drehachse 34.1 und 34.2, wobei sie jeweils an einer Federzunge 35.1 und 35.2 hängen, welche vorgespannt ist und die Druckrollen 33.1 und 33.2 gegen den Endlosriemen 29.1 und 29.2 drückt.

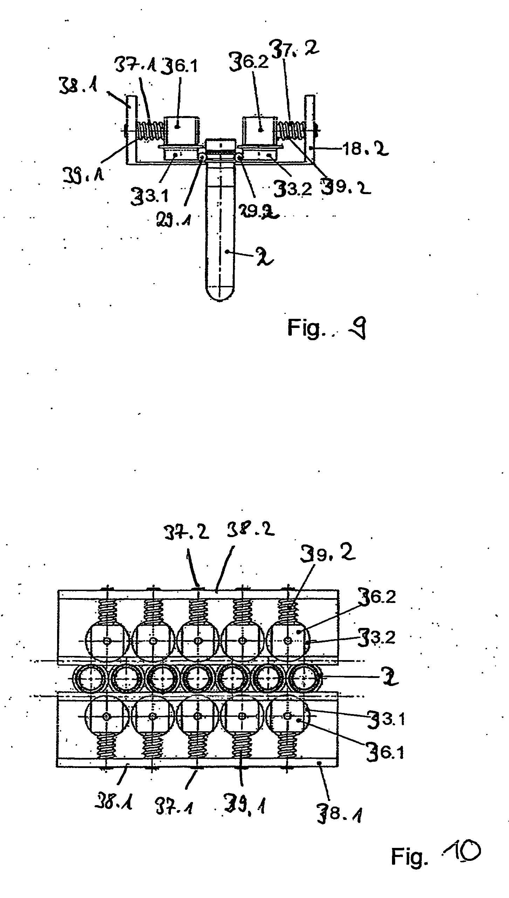

Bei einer weiteren Ausführungsform einer erfindungsgemässen Vorrichtung zum Transport von Vorformlingen 2 gemäss den Figuren 9 und 10 sind die Druckrollen 33.1 und 33.2 jeweils an einem Lagerblock 36.1 und 36.2 angeordnet, wobei jeder Lagerblock 36.1 und 36.2 über einen Bolzen 37.1 und 37.2 an einer Wand 38.1 und 38.2 gehalten ist. Gegen diese Wand 38.1 und 38.2 stützt sich jeder Lagerblock 36.1 bzw. 36.2 über eine Schraubenfeder 39 ab, welche den Bolzen 37.1 und 37.2 umschlingt. Diese Schraubenfeder 39 ist ebenfalls vorgespannt, sodass die Druckrollen 33.1 und 33.2 den Endlosriemen 29.1 und 29.2 gegen den Vorformling 2 drücken.

Es ist auch möglich, Vorformlinge entlang eine kurvige Transportbahn zu transprotieren. Werden beispielsweise die Vorformlinge hängend angeordnet, wie dies in Figur 11 gezeigt ist, und durchlaufen sie unterschiedliche Steigungen der Transportbahn, so werden positive und negative Steigungsbereiche durchlaufen, das heisst, in den positiven Steigungsbereichen beabstanden sich Mittelachsen benachbarter Vorformlinge mehr, während benachbarte Vorformlinge in den negativen Steigungsbereich in dem auf dem Ringkragen 28 folgenden Bereich gegeneinander gedrückt werden und sich gegenseitig ausweichen, so dass die Vorformlinge nicht mehr in einer Ebene geführt sind und verklemmen.

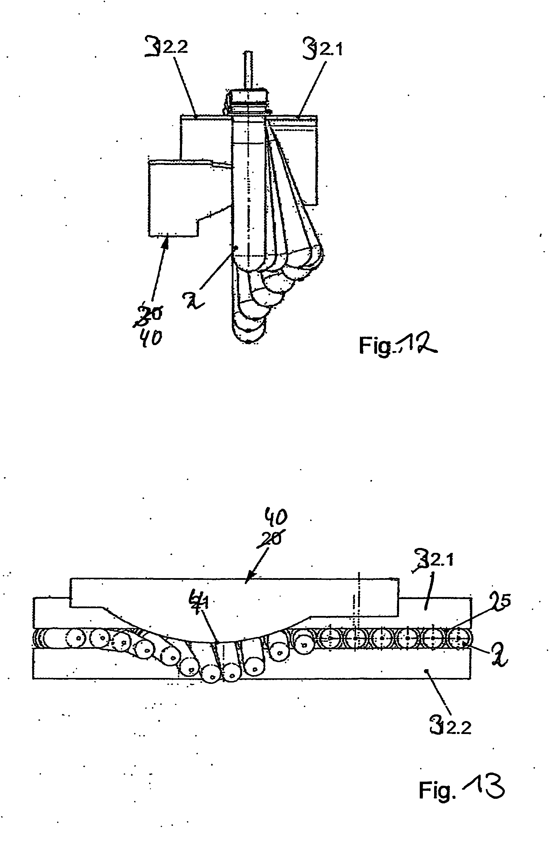

Gemäss Figur 12 und 13 wird in dem Bereich des Schlitzes 25 ein Auslenkelement 40 mit einer gerundeten Gleitfläche 41 eingesetzt. Im Bereich dieser Gleitfläche 41 werden die Vorformlinge 2 ausgelenkt, sodass ihnen mehr Platz im Negativbogenbereich zur Verfügung steht und der Nachteil einer negativen Steigung aufgehoben wird.

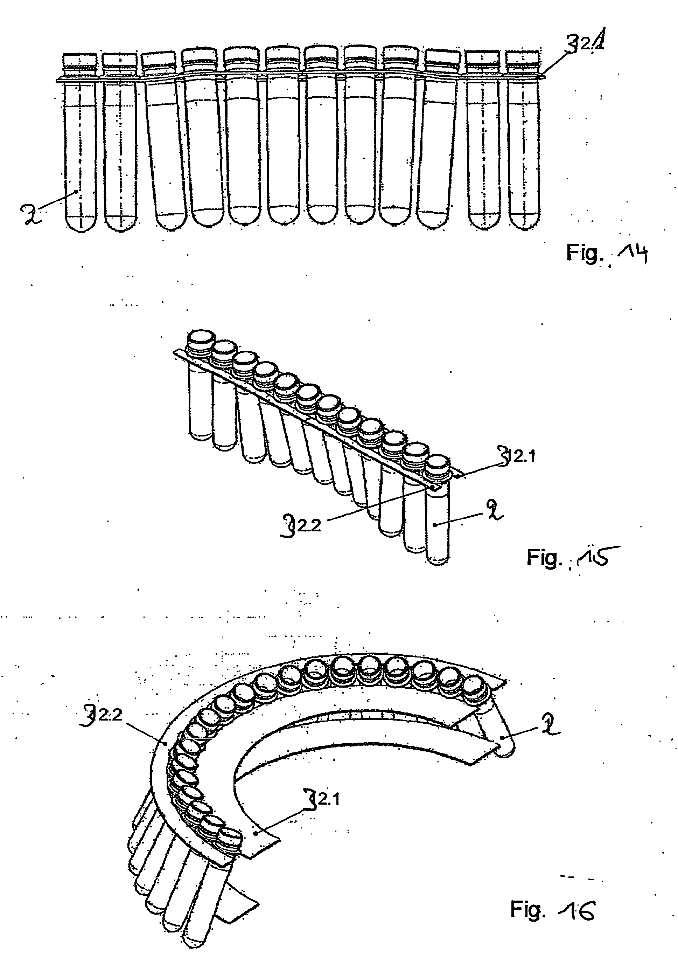

Eine andere Möglichkeit gemäss den Figuren 14 und 15 besteht darin, dass die Gleitebenen 32.1 und 32.2 abschnittsweise unterschiedliche Höhen durchlaufen, sodass die Vorformlinge 2 in diesem Bereich nach aussen gekippt werden.

Ferner besteht gemäss Figur 16 auch die Möglichkeit, die Gleitebene 32.1 und 32.2 geneigt in unterschiedlichen Höhen anzuordnen, sodass ebenfalls die Vorformlingen 2 nach aussen gekippt werden.

### Bezugszeichenliste

| | | | | | |
|---|---|---|---|---|---|
| 1 | | 34 | Drehachse | 67 | |
| 2/2.1 | Vorformling/Flaschen | 35 | Federzunge | 68 | |
| 3 | Ringkragen | 36 | Lagerblock | 69 | |
| 4 | | 37 | Bolzen | 70 | |
| 5 | | 38 | Wand | 71 | |
| 6 | | 39 | Schraubenfeder | 72 | |
| 7 | | 40 | Auslenkelement | 73 | |
| 8 | | 41 | Gleltfläche | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | a | Abstand |
| 17 | | 50 | | | |
| 18 | | 51 | | | |
| 19 | | 52 | | T | Transportrichtung |
| 20 | | 53 | | | |
| 21 | | 54 | | | |
| 22 | Gehäuse | 55 | | | |
| 23 | Gehäuseschale | 56 | | | |
| 24 | Randkante | 57 | | | |
| 25 | Schlitz | 58 | | | |
| 26 | Schenkel | 59 | | | |
| 27 | Langloch | 60 | | | |
| 28 | | 61 | | | |
| 29 | Endlosriemen | 62 | | | |
| 30 | Umlenkrollen | 63 | | | |
| 31 | Niederhalter | 64 | | | |
| 32 | Gleitebene | 65 | | | |
| 33 | Druckrolle | 66 | | | |

## Patentansprüche

1. Vorrichtung zum Transportieren von Gegenständen (2) mit einer Profilierung (3), insbesondere von Flaschen oder Vorformlingen mit einem Ringkragen, zwischen zwei Gleitebenen (32.1, 32.2), auf denen die Profilierung (3) der Gegenstände (2) aufliegt, mit:
- einem Gehäuse (22), das die beiden Gleitebenen (32.1, 32.2) und zwei Randkanten (24.1, 24.2), die einen Gehäuseschlitz (25) zwischen sich ausbilden, aufweist, wobei die Gleitebenen (32.1, 32.2) sich an die Randkanten (24.1, 24.2) seitlich anschliessen,
- einer innerhalb des Gehäuses (22) angeordneten Transporteinrichtung zum Transportieren der Gegenstände (2) zwischen den beiden Gleitebenen (32.1, 32.2),
**dadurch gekennzeichnet,**
**dass** das Gehäuse (22) aus zwei Gehäuseschalen (23.1, 23.2) zusammengesetzt ist, wobei die beiden Gehäuseschalen (23.1, 23.2) verschiebbar ineinander geführt sind, so dass der Abstand (a) der Gleitebenen (32.1, 32.2) zueinander veränderbar ist, dass die Transporteinrichtung ein Endlosriemen (29.1, 29.2) ist, und
**dass** Druckrollen (33.1, 33.2) federnd in einer Gehäuseschale (23.1, 23.2) angeordnet sind, wobei die Druckrollen (33.1, 33.2) den Endlosriemen (29.1, 29.2) federnd gegen die zu transportierenden Gegenstände (2) drücken, so dass der Endlosriemen (29.1, 29.2) in reibschlüssigem Kontakt mit den zu transportierenden Gegenständen (2) gelangt.

2. Vorrichtung nach Anspruch 1, **dadurch gekennzeichnet, dass** die Druckrollen (33.1, 33.2) an Federzungen (35.1, 35.2) gelagert sind.

3. Vorrichtung nach Anspruch 1 **dadurch gekennzeichnet, dass** die Druckrollen (33.1 , 33.2) an einem Lagerblock (36.1 , 36.2) angeordnet sind, der sich über eine Feder (39.1 , 39.2) gegen eine Wand (38.1 , 38.2) abstützt.

4. Vorrichtung nach Anspruch 3, **dadurch gekennzeichnet, dass** die Feder (39.1, 39.2) einen Bolzen (37.1, 37.2) umschlingt, der in die Wand (38.1, 38.2) eingesetzt ist.

5. Vorrichtung nach wenigstens einem der Ansprüche 1 bis 4, **dadurch gekennzeichnet, dass** der Endlosriemen (29.1, 29.2) zumindest zwei Umlenkrollen (30.1, 30.2) umschlingt.

6. Vorrichtung nach Anspruch 5, **dadurch gekennzeichnet, dass** die Umlenkrollen (30.1, 30.2) parallel zur Vertikalachse des Gegenstandes (2) angeordnet sind.

7. Vorrichtung nach Anspruch 5 oder 6, **dadurch gekennzeichnet, dass** die Umlenkrollen (30.1, 30.2) kippbar sind.

8. Vorrichtung nach wenigstens einem der Ansprüche 1 bis 7, **gekennzeichnet durch** einen Niederhalter (31), so angeordnet, dass die Gegenstände nicht nach oben ausweichen können.

9. Vorrichtung nach wenigstens einem der Ansprüche 1 bis 8, **dadurch gekennzeichnet, dass** ihr eine Einrichtung (40) zum Auslenken der der Gegenstände (2) aus Ihrer Transportbahn zugeordnet ist.

10. Vorrichtung nach Anspruch 9, **dadurch gekennzeichnet, dass** die Einrichtung (40) zum Auslenken der Gegenstände (2) aus zumindest einer zusätzlichen Gleitfläche (41) besteht, die in den Bereich der Transportbahn eingreift.

## Claims

1. A device for transporting objects (2) with profiling (3), in particular bottles or preforms with an annular collar, between two slide planes (32.1, 32.2) on which the profiling (3) of the objects (2) rests, having:
- a housing (22) which has the two slide planes (32.1, 32.2) and two edges (24.1, 24.2), the latter forming a housing slot (25) therebetween, wherein the slide planes (32.1, 32.2) laterally adjoin the edges (24.1, 24.2),
- a transport device, arranged within the housing (22), to transport the objects (2) between the two slide planes (32.1, 32.2),
**characterised**
**in that** the housing (22) is composed of two housing shells (23.1, 23.2), wherein the two housing shells (23.1, 23.2) are guided displaceable in each other, so that the spacing (a) of the slide planes (32.1, 32.2) from one another can be altered,
**in that** the transport device is an endless belt (29.1, 29.2), and
**in that** pressure rollers (33.1, 33.2) are arranged in a sprung manner in a housing shell (23.1, 23.2), wherein the pressure rollers (33.1, 33.2) press the endless belt (29.1, 29.2) in a spring-loaded manner against the objects (2) to be transported, so that the endless belt (29.1, 29.2) comes into friction-locked contact with the objects (2) to be transported.

2. A device according to claim 1, **characterised in that** the pressure rollers (33.1, 33.2) are mounted on spring tongues (35.1, 35.2).

3. A device according to claim 1, **characterised in that** the pressure rollers (33.1, 33.2) are arranged on a bearing block (36.1, 36.2) supported against a wall (38.1, 38.2) via a spring (39.1, 39.2).

4. A device according to claim 3, **characterised in that** the spring (39.1, 39.2) wraps around a bolt (37.1, 37.2) inserted into the wall (38.1, 38.2).

5. A device according to at least one of claims 1 to 4, **characterised in that** the endless belt (29.1, 29.2) wraps around at least two deflector rollers (30.1, 30.2).

6. A device according to claim 5, **characterised in that** the defector rollers (30.1, 30.2) are arranged parallel to the vertical axis of the object (2).

7. A device according to claim 5 or 6, **characterised in that** the deflector rollers (30.1, 30.2) are tiltable.

8. A device according to at least one of claims 1 to 7, **characterised by** a holding-down device (31), arranged in such a manner that the objects cannot make way upwards.

9. A device according to at least one of claims 1 to 8, **characterised in that** associated therewith there is a device (40) for deflecting the objects (2) from their transport path.

10. A device according to claim 9, **characterised in that** the device (40) for deflecting the objects (2) is composed of at least one additional slide surface (41), which engages the region of the transport path.

## Revendications

1. Dispositif pour le transport d'objets (2) avec un profilage (3), en particulier de bouteilles ou de préformes avec une collerette annulaire, entre deux plans de glissement (32.1, 32.2) sur lesquels s'appuie le profilage (3) des objets (2), avec:
- un boîtier (22) qui présente deux plans de glissement (32.1, 32.2) et deux bords (24.1, 24.2) formant entre eux une fente de boîtier (25), les plans de glissement (32.1, 32.2) venant se raccorder latéralement aux bords (24.1, 24.2),
- un dispositif de transport disposé à l'intérieur du boîtier (22), destiné à transporter les objets (2) entre les deux plans de glissement (32.1, 32.2),
**caractérisé par le fait**
**que** le boîtier (22) se compose de deux coquilles de boîtier (23.1, 23.2), les deux coquilles de boîtier (23.1, 23.2) étant guidées de manière déplaçable l'une dans l'autre, de sorte que la distance (a) entre les plans de glissement (32.1, 32.2) soit variable,
**que** le dispositif de transport est une courroie sans fin (29.1, 29.2), et
**que** des rouleaux de pression (33.1, 33.2) sont disposés de manière élastique dans une coquille de boîtier (23.1, 23.2), les rouleaux de pression (33.1, 33.2) poussant les courroies sans fin (29.1, 29.2) de manière élastique contre les objets à transporter (2) de sorte que la courroie sans fin (29.1, 29.2) entre en contact de friction étroit avec les objets à transporter (2).

2. Dispositif selon la revendication 1, **caractérisé par le fait que** les rouleaux de pression (33.1, 33.2) sont montés sur des languettes à ressort (35.1, 35.2).

3. Dispositif selon la revendication 1, **caractérisé par le fait que** les rouleaux de pression (33.1, 33.2) sont disposés sur un bloc de palier (36.1, 36.2) qui s'appuie par l'intermédiaire d'un ressort (39.1, 39.2) contre une paroi (38.1, 38.2).

4. Dispositif selon la revendication 3, **caractérisé par le fait que** le ressort (39.1, 39.2) entoure un boulon (37.1, 37.2) qui est placé dans la paroi (38.1, 38.2).

5. Dispositif selon au moins l'une des revendications 1 à 4, **caractérisé par le fait que** la courroie sans fin (29.1, 29.2) entoure au moins deux poulies de renvoi (30.1, 30.2).

6. Dispositif selon la revendication 5, **caractérisé par le fait que** les poulies de renvoi (30.1, 30.2) sont disposées parallèles à l'axe vertical de l'objet (2).

7. Dispositif selon la revendication 5 ou 6, **caractérisé par le fait que** les poulies de renvoi (30.1, 30.2) sont pivotables.

8. Dispositif selon au moins l'une des revendications 1 à 7, **caractérisé par** un abaisseur (31) disposé de sorte que les objets ne puissent pas se dévier vers le haut.

9. Dispositif selon au moins l'une des revendications 1 à 8, **caractérisé par le fait qu'**il leur est associé un dispositif (40) destiné à sortir les objets (2) de leur chemin de transport.

10. Dispositif selon la revendication 9, **caractérisé par le fait que** le dispositif (40) destiné à sortir les objets (2) consiste au moins en une face de glissement additionnelle (41) qui s'engage dans la zone du chemin de transport.
